# FASCICULE DE BREVET EUROPEEN

(11) **EP 3 426 916 B1**
(45) Date de publication et mention de la délivrance du brevet: **06.05.2020**
(21) Numéro de dépôt: 17713743.7
(22) Date de dépôt: 09.03.2017
(51) Int. Cl.: F03D 5/00, F03D 15/20

(54) **ÉOLIENNE AÉROPORTÉE**
LUFTWINDTURBINE
AIRBORNE WIND TURBINE

(30) Priorité: 10.03.2016 FR 1651990; 18.11.2016 FR 1661221
(43) Date de publication de la demande: 16.01.2019
(73) Titulaire: Kitewinder, 33000 Bordeaux (FR)
(72) Inventeur: NORMAND, Olivier, 33640 Beautiran (FR)
(74) Mandataire: Fantin, Laurent
(86) Numéro de dépôt international: PCT/FR2017/050526
(87) Numéro de publication internationale: WO 2017/153686

(56) Documents cités:
- WO-A1-2013/151678
- DE-A1-102013 205 781
- US-A1- 2015 330 368

## Description

La présente demande se rapporte à une éolienne aéroportée.

On connait d'après le document WO2013/151678 une éolienne suspendue sous une voile.

Selon un mode de réalisation présenté dans ce document, l'éolienne comprend quatre hélices reliées chacune par un lien à un dispositif anti-rotatif qui est lui-même relié par un lien unique au sol. Selon cette configuration, les quatre hélices se déplacent selon un cercle dont l'axe passe par le dispositif anti-rotatif.

Selon une particularité de ce document, le mouvement de rotation est converti en énergie électrique au sol. A cet effet, le mouvement de rotation des hélices est transmis au sol grâce à une courroie. Quelle que soit la variante, la courroie est supportée au niveau des hélices par un cercle qui forme une poulie dont le plan de guidage (qui correspond au plan de la poulie) est perpendiculaire à l'axe de rotation des hélices.

Ce type d'éolienne aéroportée n'est pas pleinement satisfaisant car la tension de la courroie est difficile à maîtriser du fait que le dispositif anti-rotatif est également relié par un lien au sol.

Selon un autre inconvénient, le plan de guidage de la poulie supportant la courroie étant perpendiculaire à l'axe de rotation des hélices, le système de transmission du mouvement de rotation au sol tend à perturber le fonctionnement de l'éolienne ou vice versa.

La présente invention vise à remédier aux inconvénients de l'art antérieur.

A cet effet, l'invention a pour objet un dispositif aéroporté comprenant une éolienne avec un axe de rotation, une structure aéroportée configurée pour supporter l'éolienne, un système de sustentation configuré pour maintenir en vol la structure aéroportée, au moins une courroie pour assurer une transmission d'un mouvement de rotation de l'éolienne jusqu'à une station au sol, ladite courroie étant guidée par au moins une poulie de renvoi au sol, chaque poulie de renvoi au sol étant supportée par un arbre pivotant, positionnée dans un plan de guidage perpendiculaire à l'arbre pivotant et configurée pour guider la courroie. Selon l'invention, l'axe de rotation de l'éolienne et le plan de guidage de chaque poulie de renvoi au sol forment un angle inférieur à 60°.

Cette configuration permet de limiter les perturbations induites par le système de transmission du mouvement de rotation au sol sur le fonctionnement de l'éolienne ou vice versa.

D'autres caractéristiques et avantages ressortiront de la description de l'invention qui va suivre, description donnée à titre d'exemple uniquement, en regard des dessins annexés sur lesquels :
- La figure 1 est une vue de côté d'un dispositif aéroporté relié au sol par une courroie qui illustre une première variante de l'invention,
- La figure 2 est une vue de côté de la structure aéroportée du dispositif aéroporté visible sur la figure 1,
- La figure 3 est une vue en perspective de la structure aéroportée visible sur la figure 1,
- La figure 4 est une vue de dessus de la structure aéroportée selon un mode de réalisation de l'invention,
- La figure 5 est une vue de face d'un système de guidage des brins d'une courroie selon un mode de réalisation de l'invention,
- La figure 6 est une vue en perspective depuis l'arrière d'une station au sol selon un mode de réalisation de l'invention,
- La figure 7 est une vue en perspective depuis l'avant d'une station au sol selon un mode de réalisation de l'invention,
- Les figures 8A et 8B sont des vues de détails illustrant un système de blocage de la poulie respectivement à l'état débloqué et à l'état bloqué,
- Les figures 9A et 9B sont des vues de détails illustrant un embrayage entre un motoréducteur et la poulie respectivement à l'état débrayé et à l'état embrayé,
- La figure 10 est une vue de côté d'un dispositif aéroporté relié au sol par une courroie qui illustre une deuxième variante de l'invention,
- La figure 11 est une vue de face d'un support de pales du dispositif aéroporté visible sur la figure 10,
- La figure 12 est une vue en perspective d'une structure aéroportée du dispositif aéroporté visible sur la figure 10,
- La figure 13 est une vue en perspective d'une station au sol qui illustre un autre mode de réalisation,
- La figure 14 est une vue en perspective de la station au sol visible sur la figure 13, sans une partie du capot,
- La figure 15 est une vue en perspective d'une structure aéroportée qui illustre une autre variante, et
- La figure 16 est une vue latérale d'une poulie de renvoi au sol de la structure aéroportée visible sur la figure 15.

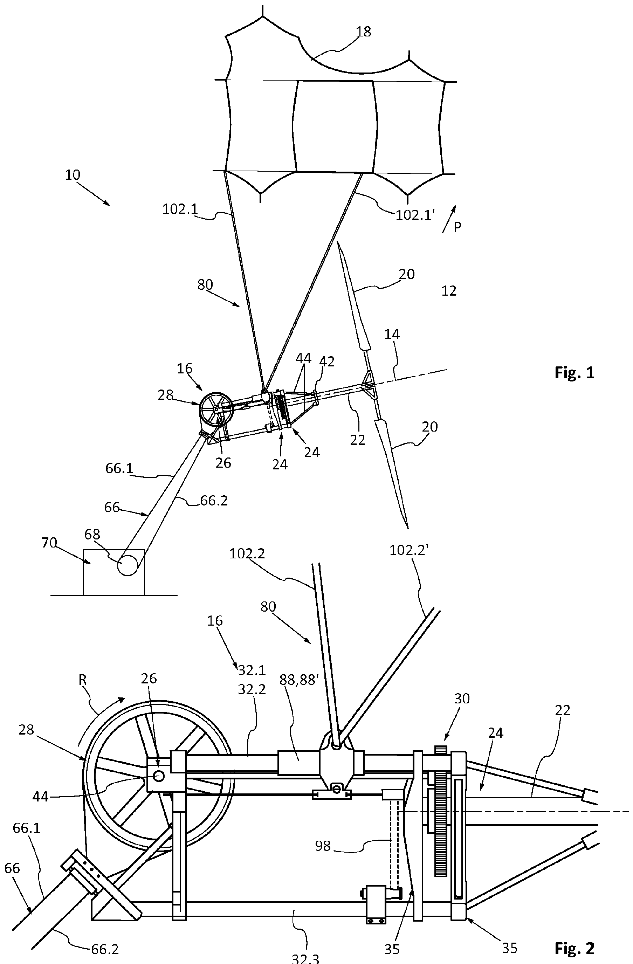

Sur les figures 1 à 5, on a représenté une première variante d'un dispositif aéroporté 10 comprenant une éolienne 12 avec un axe de rotation 14, une structure aéroportée 16 qui supporte l'éolienne 12 et un système de sustentation 18 qui maintient en vol la structure aéroportée 16.

Selon un mode de réalisation visible sur la figure 1, le système de sustentation 18 est une voile.

Selon un mode de réalisation, l'éolienne 12 comprend des pales 20 reliées à un arbre tournant 22 qui matérialise l'axe de rotation de l'éolienne 12.

En fonctionnement, le vent oriente le dispositif aéroporté 10 selon une direction appelée direction de portance P par la suite. De plus, la direction de portance P forme avec une direction horizontale un angle de portance qui est fonction notamment du système de sustentation 18.

Dans le cas d'une éolienne avec des pales reliées à un arbre tournant 22, l'axe de rotation 14 de l'éolienne et la direction de portance P sont coplanaires.

La structure aéroportée 16 comprend une première liaison pivotante 24 supportant l'arbre tournant 22, une deuxième liaison pivotante 26 supportant une première poulie 28 ainsi qu'un système 30 de transmission du mouvement de rotation entre l'arbre tournant 22 et la poulie 28.

Selon un mode de réalisation, la structure aéroportée 16 comprend un châssis formé de trois longerons 32.1 à 32.3 parallèles entre eux, orientés selon une direction longitudinale et disposés au niveau des sommets d'un triangle isocèle. Ainsi, le châssis comprend deux longerons supérieurs 32.1 et 32.2 disposés dans un plan supérieur et un longeron inférieur 32.3. Ces longerons 32.1 à 32.3 peuvent être reliés entre eux par des renforts 34 disposés dans des plans transversaux (perpendiculaires à la direction longitudinale) qui relient chacun les longerons deux à deux.

Pour la suite de la description, l'avant du châssis correspond à la zone située à proximité de l'éolienne selon la direction longitudinale et l'arrière du châssis correspond à une zone située à l'opposé de l'éolienne.

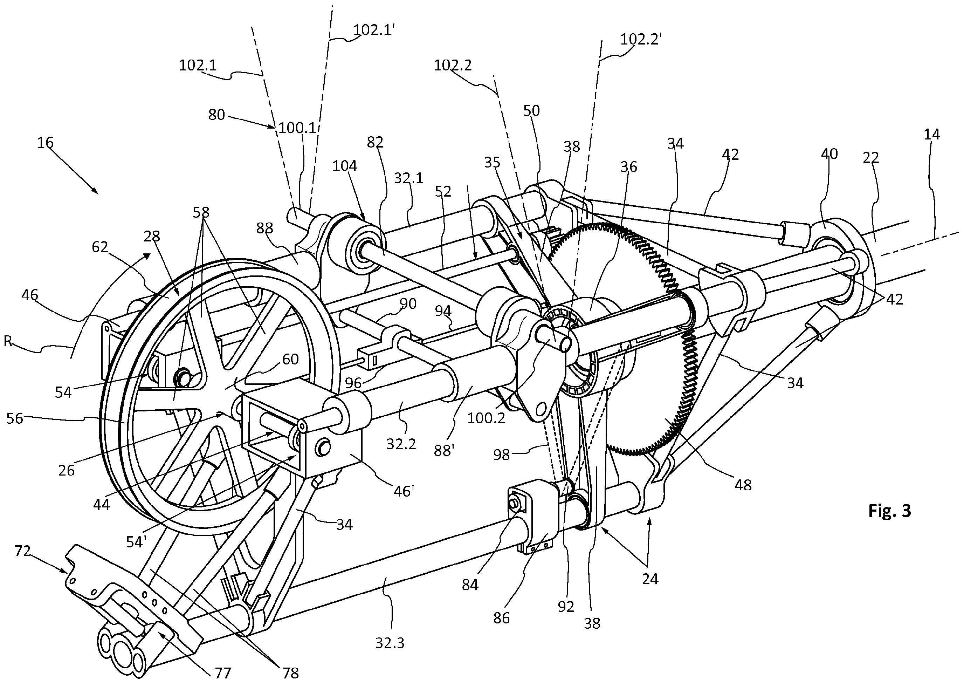

Selon un mode de réalisation visible sur la figure 3, la première liaison pivotante 24 comprend :
- Au moins un support 35 qui comporte un moyeu 36 supportant une extrémité de l'arbre tournant 22 et trois branches 38 qui relient le moyeu 36 aux longerons 32.1 à 32.3,
- une bague de guidage 40 reliée par des renforts 42 aux longerons 32.1 et 32.3.

De préférence, deux supports 35 disposés dans deux plans transversaux sont prévus.

Pour améliorer la stabilité du guidage, la bague de guidage 40 est écartée le plus possible du moyeu 36. Ainsi, les renforts 42 sont inclinés et leurs extrémités reliées à la bague de guidage 40 sont orientées vers la seconde extrémité de l'arbre de tournant 22 supportant les pales de l'éolienne.

Selon un mode de réalisation, la deuxième liaison pivotante 26 comprend un arbre pivotant 44 sur lequel est montée la première poulie 28, les extrémités de l'arbre pivotant 44 sont montées pivotantes dans des chapes 46, 46' prévues à chacune des extrémités arrières des longerons supérieurs 32.1 et 32.2.

Avantageusement, le système 30 de transmission du mouvement de rotation comprend un moyen de multiplication. Selon un mode de réalisation, le système 30 de transmission comprend :
- un premier pignon 48 avec un grand diamètre, disposé entre les deux supports 35 et solidaire de l'arbre tournant 22,
- un deuxième pignon 50 avec un petit diamètre qui engrène avec le premier pignon 48 et qui est solidaire d'un arbre de transmission 52,
- un renvoi d'angle 54 intercalé entre l'arbre de transmission 52 et l'arbre pivotant 44 positionné au niveau d'une des chapes 46.

L'arbre de transmission 52 est supporté en rotation par le ou les support(s) 35 à une première extrémité et par la chape 46 à l'autre extrémité.

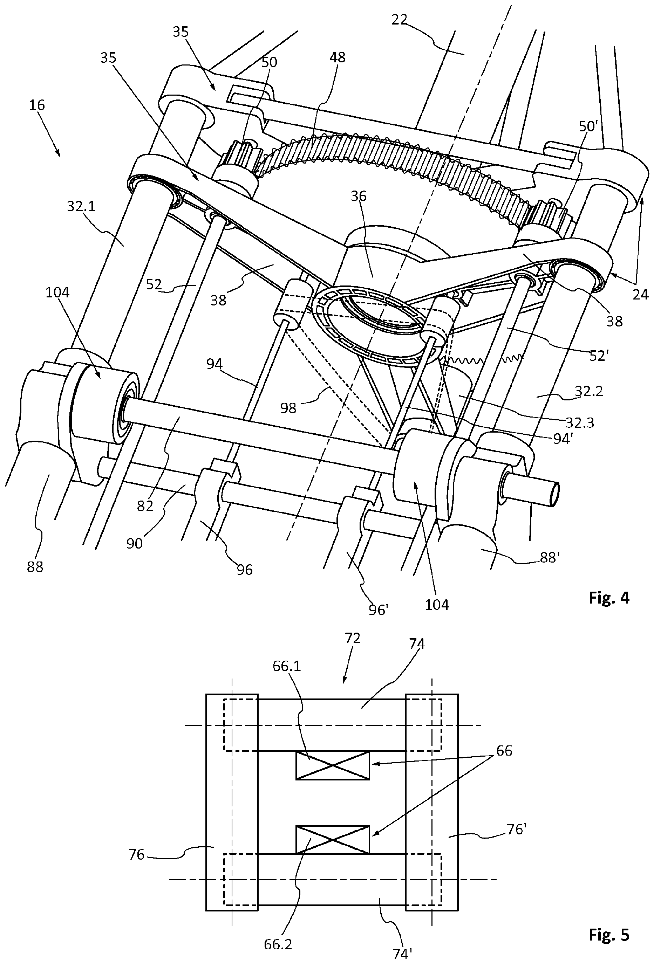

Selon un mode de réalisation visible sur les figures 3 et 4, le système 30 de transmission comprend :
- un premier pignon 48 avec un grand diamètre, solidaire de l'arbre tournant 22,
- un deuxième pignon 50 avec un petit diamètre qui engrène avec le premier pignon 48 et qui est solidaire d'un premier arbre de transmission 52,
- un premier renvoi d'angle 54 intercalé entre le premier arbre de transmission 52 et l'arbre pivotant 44 positionné au niveau d'une première chape 46,
- un troisième pignon 50' avec un diamètre identique à celui du deuxième pignon 50, qui engrène avec le premier pignon 48 et qui est solidaire d'un deuxième arbre de transmission 52', symétrique au premier arbre de transmission 52 par rapport à l'axe de l'arbre tournant 22,
- un deuxième renvoi d'angle 54' intercalé entre le deuxième arbre de transmission 52' et l'arbre pivotant 44 positionné au niveau d'une seconde chape 46'.

La première poulie 28 est disposée dans un plan dit plan de guidage perpendiculaire à l'axe de l'arbre pivotant 44. Selon un mode de réalisation, la première poulie 28 comprend une couronne périphérique 56 reliée par des branches 58 à une partie centrale 60 solidaire de l'arbre pivotant 44. La couronne périphérique 56 comprend au niveau de sa surface extérieure une gorge 62 configurée pour guider une courroie 66 (visible sur les figures 1, 2 et 5) tendue entre la première poulie 28 et une seconde poulie 68 positionnée au sol. Selon une configuration, la seconde poulie 68 est accouplée à un système 70 de transformation d'une énergie mécanique (mouvement de rotation) en énergie électrique telle que par exemple une génératrice. La seconde poulie 68 et le système 70 forment une station au sol. Les première et seconde poulies 28, 68 ainsi que la courroie 66 forme un mécanisme de transmission d'un mouvement de rotation entre le dispositif aéroporté et le sol.

De préférence, les première et deuxième poulies 28, 68 sont disposées dans un même plan de guidage. En variante, en fonction de l'orientation du vent, le plan de guidage de la première poulie 28 peut ne pas être coplanaire avec le plan de guidage de la seconde poulie 68.

Selon une caractéristique de l'invention, le plan de guidage de la première poulie 28 n'est pas perpendiculaire à l'axe de rotation de l'éolienne 12 qui correspond à l'axe de l'arbre tournant 22. L'axe de rotation de l'éolienne forme avec le plan de guidage un angle inférieur à 60°. Cette configuration permet de limiter les perturbations induites par le système de transmission d'un mouvement de rotation au sol sur le fonctionnement de l'éolienne.

De préférence, l'axe de rotation de l'éolienne 12 est contenu dans le plan de guidage de la première poulie 28. Cette configuration permet de supprimer quasiment toutes les perturbations induites par le système de transmission d'un mouvement de rotation au sol sur le fonctionnement de l'éolienne.

Selon une configuration privilégiée, l'arbre tournant 22 est perpendiculaire à l'arbre pivotant 44 et en fonctionnement, l'arbre pivotant 44 est orienté sensiblement à l'horizontale. Avantageusement, la structure aéroportée 16 comprend un système de guidage 72 de la courroie 66 permettant de resserrer les brins de la courroie 66 pour que la courroie 66 ne déjante pas et ne sorte pas de la gorge 62 de la première poulie 28.

De préférence, le système de guidage 72 comprend au moins une première paire de rouleaux 74, 74' parallèles à l'axe de l'arbre pivotant 44, faiblement espacés, entre lesquels passent les deux brins 66.1 et 66.2 de la courroie 66. Selon un mode de réalisation visible sur la figure 5, le système de guidage 72 comprend une seconde paire de rouleaux 76, 76' parallèles entre eux, perpendiculaires aux rouleaux 74, 74', faiblement espacés, entre lesquels passent les deux brins 66.1 et 66.2.

Les deux paires de rouleaux 74, 74', 76, 76' sont solidaires d'un support 77 (visible sur la figure 3) positionné à l'extrémité arrière du longeron inférieur 32.3 et relié par des renforts 78 aux longerons supérieurs 32.1 et 32.2.

La structure aéroportée 16 comprend une liaison 80 pour la relier au système de sustentation 18.

Selon un mode de réalisation, la liaison 80 comprend au moins un élément de liaison telle qu'une barre 82, mobile par rapport à la structure aéroportée 16 selon la direction longitudinale, un système de mesure de l'inclinaison 84 configuré pour mesurer l'inclinaison de la structure aéroportée autour d'un axe perpendiculaire à la direction longitudinale, une commande 86 configurée pour déplacer la barre 82 selon la direction longitudinale en fonction de l'inclinaison mesurée par le système de mesure de l'inclinaison afin que la valeur mesurée de l'inclinaison reste dans une plage donnée de part et d'autre de l'horizontale. Cette configuration permet de maintenir l'arbre tournant 44 approximativement à l'horizontale.

Selon un mode de réalisation, la barre 82 est solidaire de deux coulisseaux 88, 88' configurés pour coulisser le long des longerons supérieurs 32.1 et 32.2.

Les deux coulisseaux 88, 88' sont reliés par une traverse 90 perpendiculaire à la direction longitudinale.

Le système de mesure de l'inclinaison 84 peut être un inclinomètre ou tout autre capteur.

La commande 86 se présente sous la forme d'une motorisation électrique, solidaire du longeron inférieur 32.3, avec un pignon de sortie 92 orienté selon la direction longitudinale. Un système de transmission du mouvement de rotation du pignon de sortie 92 en un mouvement de translation de la traverse 90 est prévu. Ce système de transmission comprend au moins une tige filetée 94 qui s'étend selon la direction longitudinale, au moins une noix 96 montée sur la tige filetée 94 et solidaire de la traverse 90, une courroie ou une chaîne 98 qui relie le pignon de sortie 92 et la tige filetée 94. Selon un mode de réalisation privilégié permettant d'équilibrer les efforts, le système de transmission comprend deux tiges filetées 94, 94' et deux noix 96, 96' disposées de manière symétrique par rapport à l'axe de l'arbre tournant 22.

Bien entendu, l'invention n'est pas limitée à ce mode de réalisation pour convertir le mouvement de rotation de la commande 86 en un mouvement de translation selon la direction longitudinale de la barre 82.

De préférence, la barre 82 orientée selon une direction transversale (perpendiculaire à la direction longitudinale) comprend deux extrémités 100.1, 100.2 qui sont reliées chacune par au moins une ligne 102.1 et 102.2 au système de sustentation 18. Avantageusement, chaque extrémité 100.1 et 100.2 de la barre 82 est reliée par deux lignes 102.1, 102.1', 102.2, 102.2' au système de sustentation 18, comme illustré sur la figure 3.

Selon une autre caractéristique de l'invention, la barre 82 est reliée aux coulisseaux 88, 88' par une liaison pivotante qui intègre un mécanisme 104 pour limiter l'accélération angulaire autour de l'axe de la barre 82. Cette solution permet de limiter les mouvements angulaires de la barre 82 ce qui améliore la stabilité de la structure aéroportée 16. Ainsi, selon cette configuration, les mouvements de basculement d'avant en arrière autour d'un axe transversal sont freinés.

Selon un mode de réalisation, ce mécanisme 104 pour limiter l'accélération angulaire autour de l'axe de la barre 82 comprend pour chaque coulisseau 88, 88' un amortisseur rotatif. Selon une autre variante, les lignes 102.1, 102.1', 102.2, 102.2' sont reliées directement aux coulisseaux 88, 88', comme illustré sur la figure 2.

La courroie 66 comprend un premier brin 66.1 positionné au-dessus de la première poulie 28 et un second brin 66.2 positionné au-dessous de la première poulie 28.

Selon une autre caractéristique de l'invention, la structure aéroportée et l'éolienne sont orientées et configurées de sorte que le sens de rotation R de la première poulie 28 provoque la tension du premier brin 66.1. Le second brin 66.2 positionné sous le premier brin 66.1 étant moins tendu que le premier brin 66.1, son poids tend à l'écarter du premier brin 66.1 ce qui renforce la ségrégation des deux brins 66.1 et 66.2.

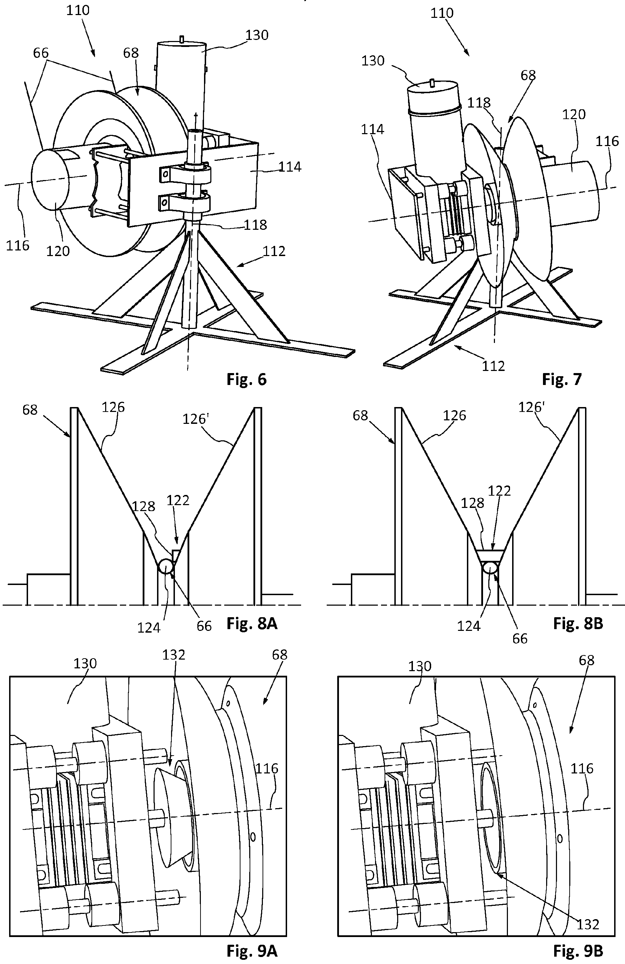

Sur les figures 6 et 7, on a représenté une station au sol 110.

Cette station au sol 110 comprend un châssis 112 ancré au sol, un support 114 auquel est reliée la seconde poulie 68 par une liaison pivotante avec un axe sensiblement horizontal 116.

Avantageusement, le support 114 est relié au châssis 112 par une liaison pivotante avec un axe de rotation sensiblement vertical 118. Cette configuration permet au support 114 de pivoter librement autour de l'axe de rotation sensiblement vertical 118 de façon à ce que la seconde poulie 68 s'oriente automatiquement de manière adéquate en fonction de la direction du vent.

La seconde poulie 68 est accouplée à une génératrice 120 permettant de convertir le mouvement de rotation de la seconde poulie 68 en énergie électrique. Cette génératrice 120 est reliée au support 114.

Selon une particularité, la station au sol 110 comprend un mécanisme 122 pour immobiliser la courroie 66 par rapport à la seconde poulie 68 configuré pour occuper un état débloqué visible sur la figure 8A dans lequel le mécanisme 112 n'interfère pas avec la courroie 66 et ne l'immobilise pas par rapport à la seconde poulie 68 et un état bloqué visible sur la figure 8B dans lequel le mécanisme 122 interfère avec la courroie 66 et l'immobilise par rapport à la seconde poulie 68. Ainsi, à l'état débloqué, le mouvement de défilement de la courroie 66 est converti en mouvement de rotation de la seconde poulie 68 puis en énergie électrique par la génératrice 120. A l'état bloqué, la courroie 66 étant immobilisée par rapport à la seconde poulie 68, le mouvement de rotation de la seconde poulie 68 est converti en un mouvement d'enroulement ou de déroulement des deux brins de la courroie 66 autour de la seconde poulie 68 à la manière d'un treuil.

Selon un mode de réalisation, la seconde poulie 68 comprend une gorge 124 dans laquelle se loge la courroie 66, prolongée par deux flancs 126 et 126'. Le mécanisme 122 comprend un barreau 128 mobile selon une direction parallèle à l'axe de rotation sensiblement horizontal 116 de la seconde poulie 68. Ce barreau 128 est mobile entre une position rétractée visible sur la figure 8A qui correspond à l'état débloqué dans lequel il ne relie pas les deux flancs 126 et 126' et une position sortie visible sur la figure 8B qui correspond à l'état bloqué dans lequel il relie les deux flancs 126, 126' de sorte à ce que la courroie 66 soit immobilisée entre la gorge 124 et le barreau 128 et à ce que les deux brins de la courroie 66 soient entrainés en rotation au niveau de la même génératrice de la seconde poulie de manière à provoquer soit l'enroulement de la courroie 66 autour de la seconde poulie 68 et le retour au sol de la structure aéroportée lorsque le mécanisme 122 est à l'état bloqué et que la seconde poulie 68 tourne dans un premier sens, soit le déroulement de la courroie 66 et le déploiement de la structure aéroportée lorsque le mécanisme 122 est à l'état bloqué et que la seconde poulie 68 tourne dans un second sens opposé au premier sens. Lorsque la courroie n'est plus enroulée autour de la seconde poulie 68, le mécanisme 122 peut passer à l'état débloqué. Dans ces cas, le mouvement de défilement de la courroie 66 est converti en mouvement de rotation de la seconde poulie 68 puis en énergie électrique par la génératrice 120.

Le mécanisme 122 comprend un actionneur pour contrôler le mouvement du barreau 128 entre la position rétractée et la position sortie.

Pour entraîner la seconde poulie 68 en rotation, la station au sol 110 comprend une motorisation 130 reliée par un embrayage 132 à la seconde poulie 68.

Cet embrayage 132 est configuré pour occuper un état débrayé visible sur la figure 9A dans lequel le mouvement de rotation de la motorisation 130 n'est pas transmis à la seconde poulie 68 et un état embrayé visible sur la figure 9B dans lequel le mouvement de rotation de la motorisation 130 est transmis à la seconde poulie 68.

Selon un mode de réalisation, l'embrayage 132 est de type conique.

La motorisation 130 permet de contrôler le mouvement de rotation de la seconde poulie 68 et d'imposer un mouvement de rotation dans un premier sens qui provoque l'enroulement de la courroie 66 autour de la seconde poulie 68 ou un mouvement de rotation dans un second sens opposé au premier qui provoque le déroulement de la courroie 66 autour de la seconde poulie 68.

L'embrayage 132 permet de freiner la rotation de la seconde poulie 68, notamment lors de la transition entre l'état débloqué et l'état bloqué.

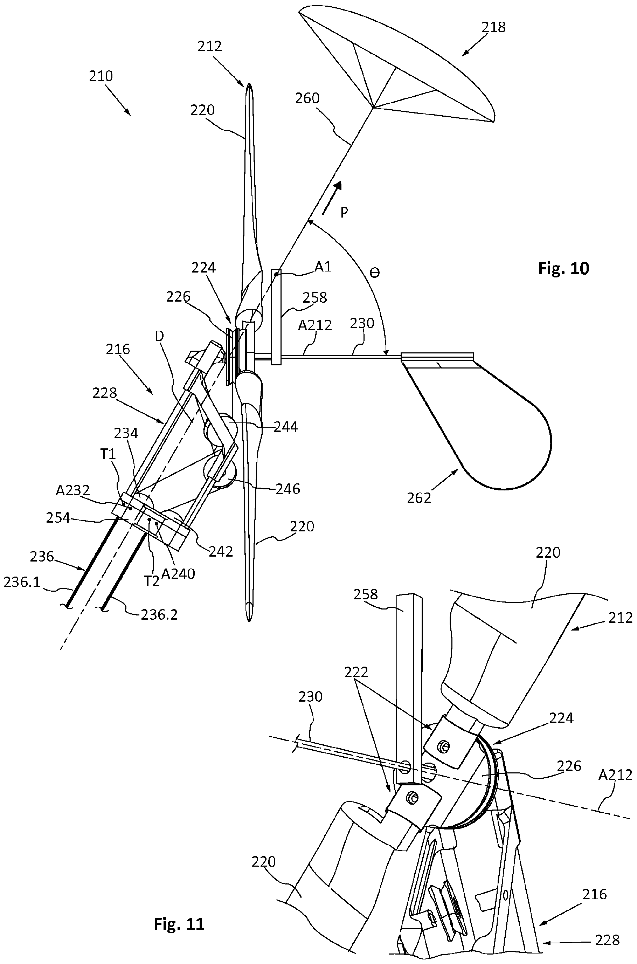

Sur les figures 10 à 12, on a représenté une deuxième variante d'un dispositif aéroporté 210 comprenant une éolienne 212 avec un axe de rotation A212, une structure aéroportée 216 qui supporte l'éolienne 212 et un système de sustentation 218 qui maintient en vol la structure aéroportée 216.

L'éolienne 212 comprend plusieurs pâles 220 reliées par une liaison 222 à un support pivotant 224 autour de l'axe de rotation de l'éolienne A212.

Selon un mode de réalisation, le support pivotant 224 est une poulie principale 226 disposée dans un plan perpendiculaire à l'axe de rotation de l'éolienne A212.

Selon un mode de réalisation, la liaison 222 entre chaque pale 220 et le support pivotant 224 est démontable. A titre d'exemple, la liaison 222 démontable comprend :
- pour chaque pâle 220, un fourreau solidaire du support pivotant 224 qui s'étend selon une direction perpendiculaire à l'axe de rotation de l'éolienne A212 et qui est configuré pour permettre d'emmancher une extrémité de la pale,
- pour chaque fourreau, un système de blocage configuré pour maintenir emmanchée l'extrémité de la pâle dans le fourreau.

La structure aéroportée 216 comprend un châssis 228 et un arbre fixe 230 qui définit l'axe de rotation de l'éolienne A212 et sur lequel est monté en rotation le support pivotant 224. L'arbre fixe 230 comprend des butées pour immobiliser en translation le support pivotant 224 selon une direction parallèle à l'axe de rotation de l'éolienne A212.

La structure aéroportée comprend un premier arbre de pivotement supporté par le châssis 228, qui définit un premier axe de pivotement A232 et au moins une première poulie de renvoi 234 configurée pour guider une courroie 236 permettant de transmettre le mouvement de rotation de l'éolienne 212 à une station au sol 238 et montée pivotante autour du premier axe de pivotement A232.

La première poulie de renvoi 234 est disposée dans un premier plan de guidage perpendiculaire au premier axe de pivotement A232.

La structure aéroportée comprend un deuxième arbre de pivotement supporté par le châssis 228, qui définit un deuxième axe de pivotement A240 et au moins une deuxième poulie de renvoi 242 configurée pour guider la courroie 236.

La deuxième poulie de renvoi 242 est disposée dans un deuxième plan de guidage perpendiculaire au deuxième axe de pivotement A240.

De préférence, les premier et deuxième plans de guidage sont coplanaires. Avantageusement, comme pour la première variante, chaque plan de guidage des poulies de renvoi 234 et 242 n'est pas perpendiculaire à l'axe de rotation de l'éolienne A212. L'axe de rotation de l'éolienne forme avec chaque plan de guidage un angle inférieur à 60°.

De préférence, l'axe de rotation de l'éolienne A212 est contenu dans les plans de guidage des poulies de renvoi 234 et 242 qui sont coplanaires.

Selon une configuration privilégiée, l'axe de rotation de l'éolienne A212 est perpendiculaire aux axes de pivotement A232 et A240 des poulies de renvoi 234 et 242.

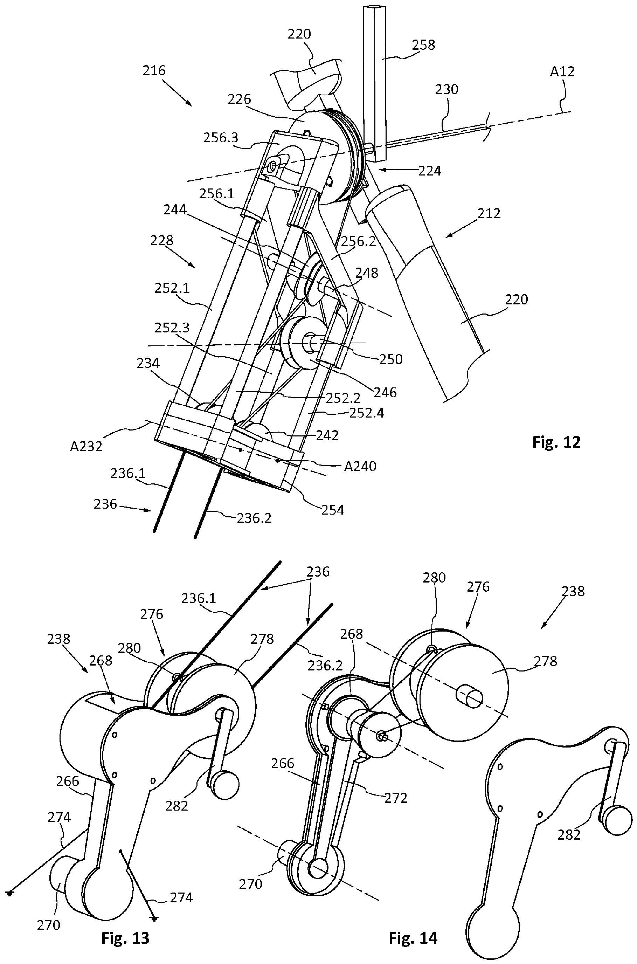

Selon un mode de réalisation visible notamment sur la figure 12, la structure aéroportée comprend une troisième poulie de renvoi 244 et une quatrième poulie de renvoi 246 respectivement entre la première poulie de renvoi 234 et la poulie principale 226 et entre la deuxième poulie de renvoi 242 et la poulie principale 226.

Les troisième et quatrième poulies de renvoi 244 et 246 sont montées pivotantes sur des troisième et quatrième arbres de pivotement 248 et 250 solidaires du châssis 228 et sont positionnées dans des troisième et quatrième plans de guidage pour assurer un guidage de la courroie 236 respectivement entre la poulie principale 226 et la première poulie de renvoi 234 et entre la poulie principale 226 et la deuxième poulie de renvoi 242. Ainsi, le troisième plan de guidage est approximativement tangent avec la poulie principale 226 et la première poulie de renvoi 234 et le quatrième plan de guidage est approximativement tangent avec la poulie principale 226 et la deuxième poulie de renvoi 242.

A titre d'exemple et de manière non limitative, selon un mode de réalisation visible sur la figure 12, le châssis 228 comprend quatre longerons 252.1 à 252.4, parallèles entre eux, orientés approximativement parallèlement à la direction de portance P en fonctionnement et un cadre 254 reliant les premières extrémités des longerons 252.1 à 252.4 et supportant les premier et deuxième arbres de pivotement. Les deuxièmes extrémités des longerons 252.1 et 252.3 sont reliées par une première traverse 256.1 et les deuxièmes extrémités des longerons 252.2 et 252.4 sont reliées par une deuxième traverse 256.2, les première et deuxième traverses 256.1 et 256.2 supportant les troisième et quatrième arbres de pivotement 248 et 250. Les longerons 252.1 et 252.2 sont reliés pas une troisième traverse 256.3 qui est approximativement perpendiculaire aux longerons 252.1 et 252.2 et parallèle aux premier et deuxième axes de pivotement A232 et A240.

En fonctionnement, la courroie 236 passe au-dessus de la première poulie de renvoi 234, en dessous de la troisième poulie de renvoi 244, au-dessus de la poulie principale 226, en dessous de la quatrième poulie de renvoi 246 et au-dessus de la deuxième poulie de renvoi 242.

Quelle que soit la variante, la structure aéroportée 216 comprend au moins une poulie de renvoi vers le sol pour guider la courroie 66, 236 en direction du sol, ladite courroie 66, 236 comprenant deux brins 66.1/66.2 ; 236.1/236.2 avec chacun un point de tangence T1, T2 avec au moins une poulie de renvoi vers le sol.

Dans le cas de la variante visible sur les figures 1 à 5, la structure aéroportée comprend une seule poulie de renvoi 28 vers le sol, les brins 66.1, 66.2 de la courroie 66 étant tangent avec la même poulie de renvoi 28 vers le sol en deux points de tangence T1, T2.

Dans le cas de la variante visible sur les figures 10 à 12, la structure aéroportée 216 comprend deux poulies de renvoi 234, 242 vers le sol, la première poulie de renvoi 234 ayant un point de tangence T1 avec le brin 236.1 et la deuxième poulie de renvoi 242 ayant un point de tangence T2 avec le brin 236.2.

Selon une caractéristique, la structure aéroportée 216 comprend d'un premier côté de l'éolienne 212 un point de liaison A1 avec le système de sustentation 218 et d'un deuxième côté de l'éolienne les deux points de tangence T1, T2. Une bissectrice D entre les droites A1T1 et A1T2 forme un angle avec l'axe de rotation de l'éolienne A212 sensiblement égal à l'angle de portance θ avec un intervalle de tolérance de +/- 20°. De préférence, la bissectrice D entre les droites A1T1 et A1T2 forme un angle avec l'axe de rotation de l'éolienne A212 sensiblement égal à l'angle de portance θ.

Ainsi, en fonctionnement, l'axe de rotation de l'éolienne A212 est sensiblement horizontal.

Selon une configuration, la structure aéroportée 216 comprend un mât 258 qui présente une première extrémité reliée à l'arbre fixe 230 du premier côté du support pivotant 224. Le premier point de liaison A1 est prévu sur le mât 258 et distant de l'arbre fixe 230. De préférence, le mât 258 est perpendiculaire à l'arbre fixe 230.

Selon un mode de réalisation, l'arbre fixe 230 présente une première extrémité reliée à la troisième traverse 256.3 à équidistance des longerons 252.1 et 252.2.

Le système de sustentation 218 est relié par au moins une ligne 260 à la deuxième extrémité du mât 258. En fonctionnement, la droite D dans le prolongement de la ligne 260 est approximativement parallèle aux brins 236.1 et 136.2 et positionnée à équidistance desdits brins 236.1, 236.2.

Selon une autre caractéristique, la structure aéroportée 216 comprend un système de stabilisation 262 pour limiter les mouvements de rotation autour de l'axe de rotation de l'éolienne A212. Selon un mode de réalisation, le système de stabilisation 262 comprend une surface de stabilisation plane sensiblement rigide qui s'étend dans un plan contenant l'axe de rotation de l'éolienne A212 et qui est reliée à la deuxième extrémité de l'arbre fixe 230. La surface de stabilisation est parallèle aux plans de guidage des première et deuxième poulies de renvoi 234 et 242 et elle est orientée de sorte à être verticale et décalée vers le bas par rapport à l'arbre fixe 230 en fonctionnement.

Sur les figures 13 et 14, on a représenté une autre variante d'une station au sol 238 qui comprend un châssis 266 qui supporte une poulie de réception 268 configurée pour guider la courroie 236, une génératrice 270 accouplée à la poulie de réception 268 par un système de transmission 272. Ainsi, le défilement de la courroie 236 provoque la rotation de la poulie de réception 268 qui entraîne en rotation la génératrice 270 grâce au système de transmission 272.

La génératrice 270 est configurée pour transformer un mouvement de rotation en courant électrique.

Selon une configuration, le châssis 266 se présente sous la forme d'un boitier qui comporte deux flasques parallèles entre lesquels sont positionnés la poulie de réception 268 et le système de transmission 272.

Le dispositif aéroporté est relié à la station au sol par les deux brins 236.1 et 236.2 de la courroie 236 qui relient, respectivement, la poulie de réception 268 et la première poulie de renvoi 234 ainsi que la poulie de réception 268 et la deuxième poulie de renvoi 242.

Aucun autre lien ne relie le dispositif aéroporté et le sol ou un élément solidaire du sol. Selon une configuration, la station au sol 238 comprend un système d'arrimage 274 pour la relier au sol ou à un élément solidaire du sol.

La station au sol 238 comprend un système 276 pour enrouler et dérouler la courroie 236. A l'état totalement déroulé, la structure aéroportée est suspendue sous le système de sustentation et à l'état totalement enroulé, la structure aéroportée est juxtaposée à la station au sol.

Le système 276 pour enrouler et dérouler la courroie 236 comprend un touret 278 positionné entre les deux brins 236.1 et 236.2 avec un axe de rotation A278 parallèle à l'axe A268 de la poulie de réception 268. Le touret 278 comprend au moins un guide 280 pour au moins l'un des brins 236.1 de la courroie 236.

Lorsque la courroie 236 est complètement déroulée, le brin 236.1 passe à travers le guide 280. Lorsque le touret 278 pivote autour de l'axe A278, le guide 280 enroule le brin 236.1 autour du touret 278.

Selon une autre variante, le touret 278 n'est pas positionné entre les brins mais positionné sous le brin 236.2 qui passe à proximité du touret 278. Le touret 278 comprend un crochet mobile en translation selon une direction parallèle à l'axe du touret 278 entre une première position écartée du brin et une deuxième position dans laquelle il crochète le brin 236.2. Dans la deuxième position, la rotation du touret 278 provoque l'enroulement du brin 236.2 accroché par le crochet, autour du touret 278.

Selon une autre variante, le touret 278 n'est pas positionné entre les brins mais positionné sous le brin 236.2 qui passe à proximité du touret 278. Le touret 278 comprend un crochet fixe. Selon cette variante, lorsque l'utilisateur souhaite enrouler la courroie 236, il positionne manuellement le brin 236.2 sous le crochet, de sorte que la rotation du touret 278 provoque l'enroulement du brin 236.2 accroché par le crochet.

Le mouvement de rotation du touret 278 peut être motorisé ou manuel.

Selon un mode de réalisation, la station au sol 238 comprend une manivelle 282 pour provoquer le mouvement de rotation du touret 278.

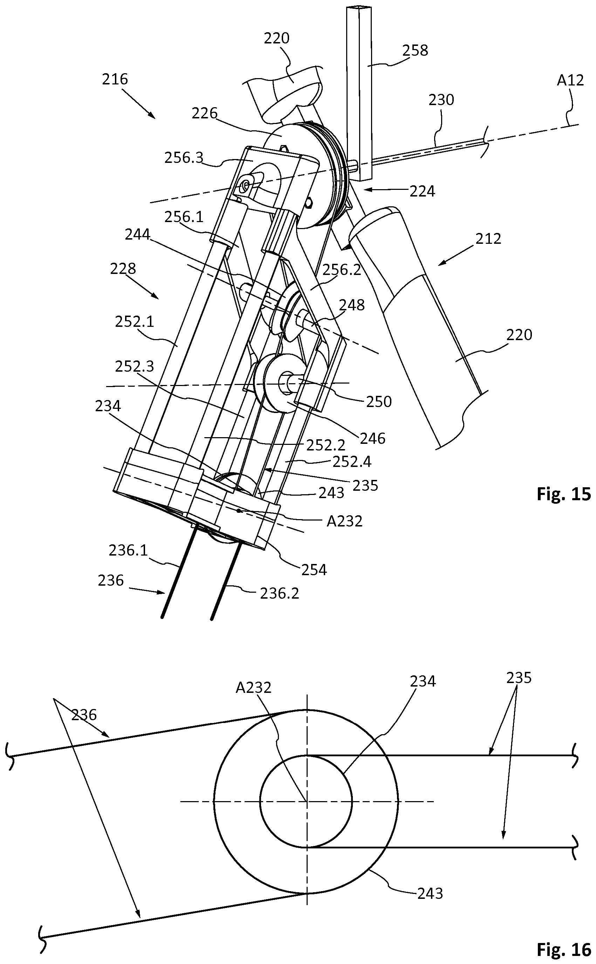

Selon une troisième variante visible sur les figures 15 et 16, le dispositif aéroporté comprend une structure aéroportée 216 proche de la deuxième variante, les éléments communs aux deuxième et troisième variantes portant la même référence.

Selon cette troisième variante, le système de transmission du mouvement de rotation de l'éolienne 212 à une station au sol 238 comprend deux courroies 235 et 236.

La première courroie 235 permet de transmettre le mouvement de rotation entre une poulie principale 226 entrainée en rotation par l'éolienne 212 et une première poulie de renvoi au sol 234. Selon un mode de réalisation, la première poulie de renvoi 234 est supportée par un premier arbre de pivotement supporté par le châssis 228 qui définit un premier axe de pivotement A232. La première poulie de renvoi 234 est disposée dans un premier plan de guidage perpendiculaire au premier axe de pivotement A232. Le premier arbre de pivotement est disposé sur le châssis 228 à l'extrémité opposée de la poulie principale 226. Selon un mode de réalisation, la structure aéroportée comprend une troisième poulie de renvoi 244 et une quatrième poulie de renvoi 246 entre la première poulie de renvoi 234 et la poulie principale 226 positionnée sur le châssis de la même manière que pour la deuxième variante.

La deuxième courroie 236 permet de transmettre le mouvement de rotation entre une deuxième poulie de renvoi au sol 243 et une station au sol. Cette deuxième poulie de renvoi au sol 243 est supportée par le premier arbre de pivotement d'axe de pivotement A232 et liée à la première poulie de renvoi au sol 234. Ainsi, la rotation de la poulie principale 226 entraine en rotation, grâce à la première courroie 235, la première poulie de renvoi au sol 234 qui entraîne en rotation la deuxième poulie de renvoi au sol 243, la deuxième courroie 236 transmettant le mouvement de rotation de la deuxième poulie de renvoi au sol 243 au sol.

Le fait de prévoir deux courroies 235, 236 permet de réduire les contraintes sur les systèmes de guidage (poulies 226, 234, 244, 246) prévus pour la première courroie 235, la tension de la première courroie 235 étant dissociée de la tension de la deuxième courroie 236 qui est liée aux conditions de vent.

Avantageusement, la deuxième poulie de renvoi au sol 243 a un diamètre supérieur à celui de la première poulie de renvoi au sol 234 pour obtenir un effet de démultiplication et un meilleur rendement.

## Revendications

1. Dispositif aéroporté comprenant une éolienne (12, 212) avec un axe de rotation (14, A212), une structure aéroportée (16, 216) configurée pour supporter l'éolienne (12, 212), un système de sustentation (18, 218) configuré pour maintenir en vol la structure aéroportée (16, 216), au moins une courroie (66, 236) pour assurer une transmission d'un mouvement de rotation de l'éolienne (12, 212) jusqu'à une station au sol, ladite courroie (66, 236) étant guider par au moins une poulie de renvoi au sol (28, 234, 242), chaque poulie de renvoi au sol (28, 234, 242) étant solidaire d'un arbre pivotant (44, A232, A240), positionnée dans un plan de guidage perpendiculaire à l'arbre pivotant (44, A232, A240) et configurée pour guider la courroie (66, 236), ledit dispositif étant **caractérisé en ce que** l'axe de rotation (14, A212) de l'éolienne (12, 212) et le plan de guidage de chaque poulie de renvoi au sol (28, 234, 242) forment un angle inférieur à 60°.

2. Dispositif aéroporté selon la revendication 1, **caractérisé en ce que** l'axe de rotation de l'éolienne (12, 212) est contenu dans le plan de guidage de la ou des poulies de renvoi au sol (28, 234, 242).

3. Dispositif aéroporté selon la revendication 2, **caractérisé en ce que** chaque arbre pivotant (44, A234, A240) est orienté sensiblement à l'horizontale.

4. Dispositif aéroporté selon l'une des revendications précédentes, **caractérisé en ce que** la courroie (66, 236) comprend deux brins (66.1, 66.2, 236.1, 236.2) tangents en des premier et deuxième points de tangence (T1, T2) à la ou aux poulie(s) de renvoi au sol (28, 234, 242), et **en ce que** la structure aéroportée (16, 216) comprend d'un premier côté de l'éolienne (12, 212) un point de liaison (A1) avec le système de sustentation (218) et d'un deuxième côté de l'éolienne (212) les premier et deuxième points de tangence (T1, T2).

5. Dispositif aéroporté selon la revendication précédente, **caractérisé en ce qu'**une bissectrice entre une première droite (A1T1) passant par le premier point de liaison (A1) et le premier point de tangence (T1) et une deuxième droite (A1T2) passant par le premier point d'ancrage (A1) et le deuxième point de tangence (T2) forment un angle avec l'axe de rotation de l'éolienne (14, A212) sensiblement égal à un angle de portance (θ) avec un intervalle de tolérance de +/- 20°.

6. Dispositif aéroporté selon la revendication 4 ou 5, **caractérisé en ce que** la structure aéroportée (216) comprend un arbre fixe (230) sur lequel pivote un support pivotant (224) supportant des pales (220) de l'éolienne (212) et un mât (258) qui présente une première extrémité reliée à l'arbre fixe (230), le premier point de liaison (A1) étant prévu sur le mât (258) et distant de l'arbre fixe (230).

7. Dispositif aéroporté selon la revendication précédente, **caractérisé en ce que** la structure aéroportée (216) comprend deux poulies de renvoi (234, 242) vers le sol, la première poulie de renvoi (234) ayant un point de tangence (T1) avec le brin (236.1) et la deuxième poulie de renvoi (242) ayant un point de tangence (T2) avec le brin (236.2) et **en ce que** l'axe de rotation de l'éolienne (A212) forme avec chaque plan de guidage des première et deuxième poulies de renvoi (234, 242) un angle inférieur à 60°.

8. Dispositif aéroporté selon la revendication précédente, **caractérisé en ce que** l'axe de rotation de l'éolienne (A212) est perpendiculaire aux axes de pivotement (A232, A240) des première et deuxième poulies de renvoi (234, 242).

9. Dispositif aéroporté selon l'une des revendications 4 à 8, **caractérisé en ce que** la structure aéroportée (216) comprend un système de stabilisation (262) pour limiter les mouvements de rotation autour de l'axe de rotation de l'éolienne (A212).

10. Dispositif aéroporté selon les revendications 8 et 9, **caractérisé en ce que** le système de stabilisation (262) comprend une surface de stabilisation plane sensiblement rigide, qui s'étend dans un plan contenant l'axe de rotation de l'éolienne (A212), qui est reliée à l'arbre fixe (230) et qui est parallèle aux plans de guidage des première et deuxième poulies de renvoi (234, 242).

11. Dispositif aéroporté selon l'une des revendications précédentes, **caractérisé en ce que** la station au sol (238) comprend un châssis (266) qui supporte une poulie de réception (268) configurée pour guider la courroie (236), une génératrice (270) accouplée à la poulie de réception (268) par un système de transmission (272) et un système (276) pour enrouler et dérouler la courroie (236).

12. Dispositif aéroporté selon la revendication précédente, **caractérisé en ce que** le système (276) pour enrouler et dérouler la courroie (236) comprend une poulie d'enroulement (278) positionnée entre les deux brins (236.1, 236.2) de la courroie (236) avec un axe de rotation (A278) parallèle à l'axe (A268) de la poulie de réception (268), la poulie d'enroulement (278) comportant au moins un guide (280) pour au moins l'un des brins (236.1) de la courroie (236).

13. Dispositif aéroporté selon l'une des revendications précédentes, **caractérisé en ce que** la courroie (66) comprend un premier brin (66.1) positionné au-dessus de la première poulie (28) et un second brin (66.2) positionné au-dessous de la première poulie (28) et **en ce que** la structure aéroportée (16) et l'éolienne (12) sont orientées et configurées de sorte que le sens de rotation (R) de la première poulie (28) provoque la tension du premier brin (66.1).

14. Dispositif aéroporté selon l'une des revendications précédentes, **caractérisé en ce que** la structure aéroportée (16) comprend un système de guidage (72) de la courroie (66) permettant de resserrer les brins de la courroie (66).

15. Dispositif aéroporté selon la revendication précédente, **caractérisé en ce que** le système de guidage (72) comprend au moins une première paire de rouleaux (74, 74') parallèles à l'axe de l'arbre pivotant (44), faiblement espacés, entre lesquels passent les deux brins (66.1, 66.2) de la courroie (66).

## Patentansprüche

1. Fliegende Vorrichtung mit einem Windrad (12, 212), das über eine Drehachse (14, A212) verfügt, mit einer fliegenden Struktur (16, 216), die dazu eingerichtet ist, das Windrad (12, 212) zu halten, mit einem Auftriebssystem (18, 218), das dazu eingerichtet ist, die fliegende Struktur (16, 216) im Flug zu halten, und mit wenigstens einem Riemen (66, 236), um eine Übertragung einer Drehbewegung des Windrads (12, 212) zu einer Bodenstation zu gewährleisten, wobei der Riemen (66, 236) durch wenigstens eine Rolle (28, 234, 242) für die Rückführung zum Boden geführt ist, und wobei jede Rolle (28, 234, 242) für die Rückführung zum Boden mit einer Schwenkwelle (44, A232, A240) verbunden ist, in einer im rechten Winkel zur Schwenkwelle (44, A232, A240) ausgerichteten Führungsebene angeordnet ist und dazu eingerichtet ist, den Riemen (66, 236) zu führen, wobei die Vorrichtung **dadurch gekennzeichnet ist, dass** die Drehachse (14, A212) des Windrads (12, 212) und die Führungsebene jeder Rolle (28, 234, 242) für die Rückführung zum Boden einen Winkel kleiner 60° bilden.

2. Fliegende Vorrichtung nach Anspruch 1, **dadurch gekennzeichnet, dass** die Drehachse des Windrads (12, 212) in der Führungsebene der Rolle(n) (28, 234, 242) für die Rückführung zum Boden enthalten ist.

3. Fliegende Vorrichtung nach Anspruch 2, **dadurch gekennzeichnet, dass** jede Schwenkwelle (44, A234, A240) im Wesentlichen horizontal ausgerichtet ist.

4. Fliegende Vorrichtung nach einem der vorhergehenden Ansprüche, **dadurch gekennzeichnet, dass** der Riemen (66, 236) zwei Stränge (66.1, 66.2, 236.1, 236.2) aufweist, die an einem ersten und einem zweiten Tangentialpunkt (T1, T2) zu der oder den Rolle(n) (28, 234, 242) für die Rückführung zum Boden tangential sind, und dass die fliegende Struktur (16, 216) auf der einen Seite des Windrads (12, 212) einen Verbindungspunkt (A1) mit dem Auftriebssystem (218) aufweist und auf der zweiten Seite des Windrads (212) den ersten und zweiten Tangentialpunkt (T1, T2) aufweist.

5. Fliegende Vorrichtung nach dem vorhergehenden Anspruch, **dadurch gekennzeichnet, dass** eine Winkelhalbierende zwischen einer ersten Gerade (A1T1), die zwischen dem ersten Verbindungspunkt (A1) und dem ersten Tangentialpunkt (T1) verläuft, und einer zweiten Gerade (A1T2), die zwischen dem ersten Ankerpunkt (A1) und dem zweiten Tangentialpunkt (T2) verläuft, einen Winkel mit der Drehachse des Windrads (14, A212) im Wesentlichen gleich einem Aufstellwinkel **(θ)** mit einem Toleranzbereich von +/- 20° bildet.

6. Fliegende Vorrichtung nach Anspruch 4 oder 5, **dadurch gekennzeichnet, dass** die fliegende Struktur (216) eine feste Welle (230) aufweist, auf der sich eine drehende Drehhalterung (224) dreht, die Flügel (220) des Windrads (212) hält, und einen Mast (258) aufweist, der ein erstes mit der festen Welle (230) verbundenes Ende aufweist, wobei der erste Verbindungspunkt (A1) am Mast (258) im Abstand zur festen Welle (230) vorgesehen ist.

7. Fliegende Vorrichtung nach dem vorhergehenden Anspruch, **dadurch gekennzeichnet, dass** die fliegende Struktur (216) über zwei Rollen (234, 242) für die Rückführung zum Boden verfügt, wobei die erste Rolle (234) für die Rückführung einen Tangentialpunkt (T1) mit dem Strang (236.1) aufweist und die zweite Rolle (242) für die Rückführung einen Tangentialpunkt (T2) mit dem Strang (236.2) aufweist, und dass die Drehachse des Windrads (A212) mit den Führungsebenen der ersten und zweiten Rolle (234, 242) für die Rückführung jeweils einen Winkel kleiner 60° bildet.

8. Fliegende Vorrichtung nach dem vorhergehenden Anspruch, **dadurch gekennzeichnet, dass** die Drehachse des Windrads (A212) im rechten Winkel zu den Verschwenkachsen (A232, A240) der ersten und zweiten Rolle (234, 242) für die Rückführung angeordnet ist.

9. Fliegende Vorrichtung nach einem der Ansprüche 4 bis 8, **dadurch gekennzeichnet, dass** die fliegende Struktur (216) ein Stabilisierungssystem (262) aufweist, um die Drehbewegungen um die Drehachse des Windrads (A212) zu begrenzen.

10. Fliegende Vorrichtung nach den Ansprüchen 8 und 9, **dadurch gekennzeichnet, dass** das Stabilisierungssystem (262) eine im Wesentlichen starre, ebene Stabilisierungsoberfläche aufweist, die sich in einer die Drehachse des Windrads (A212) enthaltende Ebene erstreckt, die mit der festen Welle (230) verbunden ist und die parallel zu den Führungsebenen der ersten und zweiten Rolle (234, 242) für die Rückführung ausgerichtet ist.

11. Fliegende Vorrichtung nach einem der vorhergehenden Ansprüche, **dadurch gekennzeichnet, dass** die Bodenstation (238) ein Gestell (266) aufweist, das eine zur Führung des Riemens (236) eingerichtete Aufnahmerolle (268) hält, und einen Generator (270) aufweist, der mit der Aufnahmerolle (268) über ein Übertragungssystem (272) gekoppelt ist und ein System (276) aufweist, um den Riemen (236) auf- und abzurollen.

12. Fliegende Vorrichtung nach dem vorhergehenden Anspruch, **dadurch gekennzeichnet, dass** das System (276) zum Auf- und Abrollen des Riemens (236) eine Rolle (278) zum Aufrollen aufweist, die zwischen den beiden Strängen (236.1, 236.2) des Riemens (236) mit einer Drehachse (A278) parallel zur Achse (A268) der Aufnahmerolle (268), angeordnet ist, wobei die Rolle (278) zum Aufrollen wenigstens eine Führung (280) für wenigstens einen der Stränge (236.1) des Riemens (236) aufweist.

13. Fliegende Vorrichtung nach einem der vorhergehenden Ansprüche, **dadurch gekennzeichnet, dass** der Riemen (66) einen ersten Strang (66.1) aufweist, der über der ersten Rolle (28) angeordnet ist, und einen zweiten Strang (66.2) aufweist, der unterhalb der ersten Rolle (28) angeordnet ist, und dass die fliegende Struktur (16) und das Windrad (12) derart ausgerichtet und eingerichtet sind, dass die Drehrichtung (R) der ersten Rolle (28) eine Spannung des ersten Strangs (66,1) bewirkt.

14. Fliegende Vorrichtung nach einem der vorhergehenden Ansprüche, **dadurch gekennzeichnet, dass** die fliegende Struktur (16) ein Führungssystem (72) für den Riemen (66) aufweist, das es gestattet, die Stränge des Riemens (66) anzuziehen.

15. Fliegende Vorrichtung nach dem vorhergehenden Anspruch, **dadurch gekennzeichnet, dass** das Führungssystem (72) wenigstens ein erstes Paar von Rollen (74, 74') parallel zur Achse der Schwenkwelle (44) aufweist, die sich in einem geringen Abstand befinden und zwischen denen die beiden Stränge (66.1, 66.2) des Riemens (66) hindurchlaufen.

## Claims

1. Airborne device comprising a wind turbine (12, 212) having an axis of rotation (14, A212), an airborne structure (16, 216) configured to support the wind turbine (12, 212), a lifting system (18, 218) configured to keep aloft the airborne structure (16, 216), at least one belt (66, 236) to transmit a movement of rotation of the wind turbine (12, 212) to a ground station, said belt (66, 236) being guided by at least one return-to-ground pulley (28, 234, 242), each return-to-ground pulley (28, 234, 242) being secured to a pivoting shaft (44, A232, A240), positioned in a guiding plane perpendicular to the pivoting shaft (44, A232, A240) and configured to guide the belt (66, 236), said device being **characterized in that** the axis of rotation (14, A212) of the wind turbine (12, 212) and the guiding plane of each return-to-ground pulley (28, 234, 242) form an angle of less than 60°.

2. Airborne device according to claim 1, **characterized in that** the axis of rotation of the wind turbine (12, 212) is contained in the guiding plane of the return-to-ground pulley(s) (28, 234, 242).

3. Airborne device according to claim 2, **characterized in that** the orientation of each pivoting shaft (44, A234, A240) is essentially horizontal.

4. Airborne device according to one of the preceding claims, **characterized in that** the belt (66, 236) comprises two strands (66.1, 66.2, 236.1, 236.2) that are tangential, at first and second points of tangency (T1, T2), to the return-to-ground pulley(s) (28, 234, 242), and **in that** the airborne structure (16, 216) comprises, on a first side of the wind turbine (12, 212), a point (A1) for connection to the lifting system (218) and, on a second side of the wind turbine (212), the first and second points of tangency (T1, T2).

5. Airborne device according to the preceding claim, **characterized in that** a bisector, between a first straight line (A1T1) passing through the first connection point (A1) and the first point of tangency (T1) and a second straight line (A1T2) passing through the first connection point (A1) and the second point of tangency (T2), forms an angle, with the axis of rotation of the wind turbine (14, A212), essentially equal to a lifting angle (θ) with a tolerance range of +/- 20°.

6. Airborne device according to claim 4 or 5, **characterized in that** the airborne structure (216) comprises a fixed shaft (230) on which pivots a pivoting support (224) supporting blades (220) of the wind turbine (212) and a strut (258) which has a first end connected to the fixed shaft (230), the first connection point (A1) being provided on the strut (258) and remote from the fixed shaft (230).

7. Airborne device according to the preceding claim, **characterized in that** the airborne structure (216) comprises two return-to-ground pulleys (234, 242), the first return pulley (234) having a point of tangency (T1) with the strand (236.1) and the second return pulley (242) having a point of tangency (T2) with the strand (236.2) and **in that** the axis of rotation of the wind turbine (A212) forms with each guiding plane of the first and second return pulleys (234, 242) an angle of less than 60°.

8. Airborne device according to the preceding claim, **characterized in that** the axis of rotation of the wind turbine (A212) is perpendicular to the pivot axes (A232, A240) of the first and second return pulleys (234, 242).

9. Airborne device according to one of the claims 4 to 8, **characterized in that** the airborne structure (216) comprises a stabilizing system (262) for limiting the rotational movement about the axis of rotation of the wind turbine (A212).

10. Airborne device according to claims 8 and 9, **characterized in that** the stabilizing system (262) comprises an essentially rigid planar stabilizing surface which extends in a plane containing the axis of rotation of the wind turbine (A212), which is connected to the fixed shaft (230) and is parallel to the guiding planes of the first and second return pulleys (234, 242).

11. Airborne device according to one of the preceding claims, **characterized in that** the ground station (238) comprises a chassis (266) that supports a receiver pulley (268) which is configured to guide the belt (236), a generator (270) coupled to the receiver pulley (268) via a transmission system (272) and a system (276) for winding and unwinding the belt (236).

12. Airborne device according to the preceding claim, **characterized in that** the system (276) for winding and unwinding the belt (236) comprises a winding pulley (278) that is positioned between the two strands (236.1, 236.2) of the belt (236) with an axis of rotation (A278) parallel to the axis (A268) of the receiver pulley (268), the winding pulley (278) comprising at least one guide (280) for at least one of the strands (236.1) of the belt (236).

13. Airborne device according to one of the preceding claims, **characterized in that** the belt (66) comprises a first strand (66.1) positioned over the first pulley (28) and a second strand (66.2) positioned under the first pulley (28), and **in that** the airborne structure (16) and the wind turbine (12) are oriented and configured such that the direction of rotation (R) of the first pulley (28) tautens the first strand (66.1).

14. Airborne device according to one of the preceding claims, **characterized in that** the airborne structure (16) comprises a system (72) for guiding the belt (66), which serves to take up slack in the strands of the belt (66).

15. Airborne device according to the preceding claim, **characterized in that** the guiding system (72) comprises at least a first pair of rollers (74, 74') which are parallel to the axis of the pivoting shaft (44), have a small gap between them, and between which both strands (66.1, 66.2) of the belt (66) pass.
